# EUROPEAN PATENT SPECIFICATION

(11) **EP 0 406 757 B1**
(45) Date of publication and mention of the grant of the patent: **10.05.1995**
(21) Application number: 90112582.3
(22) Date of filing: 02.07.1990
(51) Int. Cl.: G01N 30/46

(54) **Method for chromatographic separation**
Verfahren zur chromatographischen Trennung
Procédé de séparation chromatographique

(30) Priority: 04.07.1989 FI 893243
(43) Date of publication of application: 09.01.1991
(73) Proprietor: VALTION TEKNILLINEN TUTKIMUSKESKUS, 02150 Espoo 15 (FI)
(72) Inventor: Himberg, Kimmo, SF-00 350 Helsinki (FI); Sippola, Erkki, SF-00 740 Helsinki (FI)
(74) Representative: Lehn, Werner, Dipl.-Ing.

(56) References cited:
- GB-A- 2 024 647
- US-A- 3 717 028
- JOURNAL OF CHROMATOGRAPHY. vol. 363, no. 2, 29 August 1986, AMSTERDAM NL pages199 - 205; F.R. GUENTHER ET AL: "Analysis of nitrogen heterocycles in shale oil by a dual capillary column heart cutting technique"

## Description

The present invention relates to a method for chromatographic separation whereby the separation between a stationary phase in a column and a mobile phase passed through it is performed in two stages by taking the sample under treatment into a first column for rough separation of the compounds contained in the sample and passing the rough fraction separated from it by said column into another column for a second separation stage.

Chromatographic separation is based on the partition or sorption occurring between a stationary phase and a mobile phase, which has the effect that the compounds contained in the sample are divided into fractions that move through the column at different speeds. The stationary phase may be either liquid or solid, whereas the mobile phase may be either gaseous or liquid. In typical gas chromatography, the mobile phase is a gas and the stationary phase a viscous liquid. The compounds or fractions separated in the column are generally identified on the basis of the retention times, using a detector.

Chromatographic separation can be implemented as a one-stage process, which, however, has the drawback of a poor separation capability. E.g. in industrial process supervision or in organic microelement analysis, the object under chromatographic separation may be a sample containing tens, hundreds or even thousands of different compounds in very low concentrations, e.g. of the order of a few ppm. Separating the compounds would require very long analysing times, which are not possible in repeated routine analyses.

Another common problem in chromatographic separation is that the column tends to get dirty, resulting in changes in the retention times of the compounds in the column. This again leads to difficulties in the identification of the separated compounds. In an attempt to solve this problem, reference compounds, called retention index standards, are passed through the column. On the basis of these, it is possible to estimate the changes which have occurred in the retention times of the compounds contained in the sample to be analyzed. However, this expedient does not provide sufficient help in cases where complex samples are to be analyzed, nor does it eliminate the problem of poor separation capability of the column.

Chromatographic analysis of complex samples can be rendered considerably more efficient by performing the separation in two stages in such manner that a first column separates a rough fraction of the sample, whereupon this fraction is cut off and passed to a second column for a definitive separation of the compound under analysis. In this case, the conditions prevailing in the two columns must be different, and this is achieved e.g. by using different substances as stationary phases in them. However, due to the changes in retention time resulting from the soiling of the column, it has been difficult in practice to determine the instant at which the desired fraction should be cut off.

The JOURNAL OF CHROMATOGRAPHY vol. 363, no. 2, 29 August 1986, AMSTERDAM NL pages 199 - 205; F.R. GUENTHER ET AL: "Analysis of nitrogen heterocycles in shale oil by a dual capillary column heart cutting technique" discloses a method for chromatographic separation of a sample through separation between a stationary phase in a column and a mobile phase passed through it in two stages, wherein the sample is taken to a first column for rough separation of the compounds contained in the sample, the separation taking place in the first column is monitored by a first detector, and based on the monitoring of the detector a fraction to be separated from the sample is transferred from the first column to a second column, and the separation taking place in the second column is monitored by a second detector arranged at the discharge end of the second column.

For this purpose in the prior art method first a test run using chromatographic standards is performed for determining a proper retention time window. However, as mentioned above retention times tend to change during the use of a column.

Therefore, the present invention intends to improve the above-indicated prior art method for providing a method which is more reliable.

This problem is solved by a method comprising the features indicated in claim 1. Preferred embodiments of the invention are indicated in the dependent claims.

The invention eliminates the need for carrying out tests on the sample prior to analysis to determine the instant of cut-off. The procedure provides high selectivity, speed and repeatability and permits automatiztion of the routine treatment of similar samples.

The invention is especially applicable in gas chromatography, where the stationary phases in the columns are mutually differing liquids and the mobile phase in both columns is the same gaseous substance. The samples to be analyzed may be liquids, in which case they are vaporized, using an injector, into the mobile phase passed into the first column. Simultaneously, the reference compounds, which may have been mixed in advance with the sample to be injected, are mixed with the mobile phase.

According to a preferred embodiment of the invention, the reference compounds, i.e. retention index standards, may constitute a homologous series of compounds which are similar to the compounds to be separated from the sample under analysis or to which the latter are otherwise suitably comparable. In principle, even one reference compound may be sufficient for the realization of the invention, but in practice the best results are achieved by using a series of compounds of which the first two members are obtained from the first separation stage before the fraction to be cut off and one or more members after it.

The invention is preferably carried out in an apparatus for chromatographic separation, comprising two successive columns known in themselves, each of which contains filling material constituting the stationary phase, supply and discharge ducts connected to the first column for passing the mobile phase and the sample under analysis through the column for rough separation of the compounds contained in the sample, and an inter-column connecting duct for transferring the rough fraction separated from the sample by the first column into the second column for the second stage of analysis. The apparatus comprises a detector provided between the columns, allowing the separation taking place in the first column to be so monitored as to permit the transfer of said fraction to be based during analysis on the reference compounds detected by the detector, the reference compounds being introduced into the first column together with the sample.

The filling materials contained in the columns of the apparatus may be mutually differing liquids, e.g. polysiloxanes. The detector may be e.g. a flame ionization detector, an electron capture detector or a nitrogen-phosphorus detector.

In the following, the invention is described in detail by the aid of an example by referring to the attached drawing, in which
fig. 1 represents an apparatus for chromatographic separation for carrying out the invention, consisting of two successive columns, during the first (or second) separation stage, and
fig. 2 represents the same apparatus during the cutting-off of the rough fraction separated from the sample during the first stage.

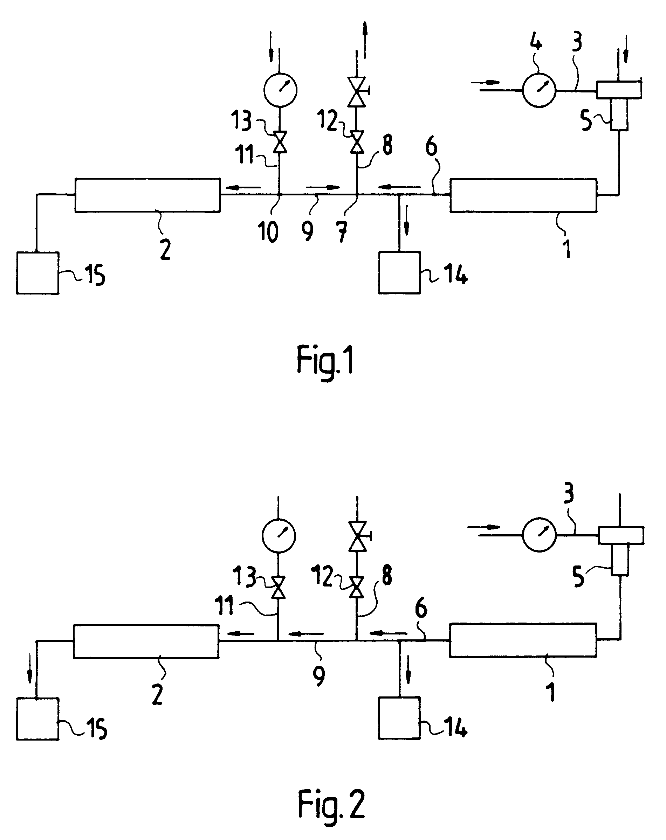

The separation equipment presented in figs. 1 and 2 comprises two successive columns 1, 2. In the first one 1 of these, the filling material is a viscous liquid, e.g. methyl polysiloxane, constituting the stationary phase, while the stationary phase in the second one 2 is another liquid, e.g. cyanopropyl polysiloxane. A gaseous mobile phase is supplied into the first column 1 via a feed duct 3. The feed duct is provided with a pressure gauge 4 and an injector 5 for the evaporation of the sample to be analyzed and the reference compounds or retention index standards into the gas flowing into the column 1. Connected to the discharge end of column 1 is a duct 6 which branches off at junction 7 into a discharge duct 8 of column 1 and an interconnecting duct 9 between columns 1 and 2. Via junction 10, the interconnecting duct 9 communicates with a feed duct 11 through which a gaseous mobile phase can be supplied into the second column 2 and, if necessary, also into the discharge duct 8 of column 1 via the interconnecting duct 9. The discharge duct 8 and said feed duct 11 connected to the interconnecting duct 9 are provided with valves 12, 13 enabling the ducts to be opened and closed. For the monitoring and control of the separation process, the apparatus is provided with detectors 14, 15, e.g. flame ionization detectors, one being placed between the columns 1, 2 in conjunction with the duct 6 leading away from column 1 and the other at the discharge end of column 2. The strength of the ionization current measured by the detector indicates the material quantity of the fraction eluted from the column. However, other types of detector can also be used, and the detectors 14, 15 may also be of different types if necessary.

The object under chromatographic separation treatment using an apparatus as illustrated by the drawing may be e.g. a sample of crude oil in which certain hydrocarbons are to be determined. The mobile phase consists of a carrier gas, which may be e.g. hydrogen, nitrogen or helium. The sample and the reference compounds, which may consist of a homologous series of hydrocarbons of a certain type, are injected at a given instant into the carrier gas, which is supplied as a continuous flow via duct 3 into column 1 and further into the discharge duct 8, the valve 12 in this duct being open. Simultaneously, a continuous flow of carrier gas is supplied via feed duct 11 into the second column 2 and through the interconnecting duct 9 into the discharge duct 8 of column 1. These flows are indicated by arrows in fig. 1.

The carrier gas flow in feed duct 3 conveys the sample and the reference compounds into the first column 1, where, as a result of the partition occurring between the stationary phase and the carrier gas, the sample is divided into fractions that advance in the column at different speeds. Each fraction remains in the column for a given retention time until it reaches the discharge end. The flux flowing from column 1 into discharge duct 8 is monitored by detector 14, which is specially aligned so that it will detect the first reference compounds emerging from the column.

On the basis of the retention indices calculated from the retention times of the reference compounds detected by detector 14, it is possible to determine with considerable accuracy the instant at which the desired fraction separated from the sample by the first column 1 must be cut off and passed into the second column 2 for further separation. Detector 14 can be so connected to the valves 12, 13 that these will be automatically closed at the instant of cutoff. The flow from the first column 1 will then proceed, as illustrated by the figure, into the second column 2, where the rough fraction will be finally partitioned into separate compounds.

Once the cut-off has occurred, the valves 12, 13 in the discharge duct 8 and feed duct 11 are opened, thus permitting the carrier gas to flow again from the feed duct 11 into the second column 2 and via the interconnecting duct 9 into the discharge duct 8. Thus, the situation is again as illustrated by fig. 1. As the carrier gas is flowing into the second column 2, the fraction which was cut off is partitioned into individual compounds which, after certain retention times, are detected by detector 15.

It is obvious to a person skilled in the art that different embodiments of the invention are not restricted to the example described above, but that they may instead be varied within the scope of the following claims.

Reference signs in the claims are intended for better understanding and shall not limit the scope of the claims.

## Claims

1. A method for chromatographic separation of a sample through separation between a stationary phase in a column and a mobile phase passed through it in two stages, wherein
- the sample is taken to a first column (1) for rough separation of the compounds contained in the sample,
- the separation taking place in the first column (1) is monitored by a detector (14),
- and based on the monitoring of the detector (14) a fraction to be separated from the sample is transferred from the first column (1) to a second column (2),
- and the separation taking place in the second column (2) is monitored by a second detector (15) arranged at the discharge end of the second column (2),
characterized by the steps of
- introducing two or more reference compounds into the first column (1) simultaneously with the sample,
- the reference compounds being so chosen that the retention time of at least two of them are shorter than that of the fraction to be separated from the sample, and
- determining on the basis of the retention indices calculated from the retention times of the reference compounds the instant at which the fraction is transferred from the first column (1) to the second column (2).

2. A method as claimed in claim 1,
characterized in that the stationary phases in the first and second columns (1,2) are different substances, whereas the mobile phase in both columns consists of the same substance.

3. A method as claimed in claim 2,
characterized in that the stationary phases are liquids and the mobile phase is a gas.

4. A method as claimed in any one of claims 1 to 3,
characterized in that the reference components comprise a homologous series of compounds.

5. A method as claimed in claim 4,
characterized in that the series of compounds comprises two members which are obtained from the first column (1) before the rough fraction to be cut off.

## Patentansprüche

1. Verfahren zur chromatographischen Trennung einer Probe durch Trennen zwischen einer stationären Phase in einer Säule und einer durch diese hindurchgeleiteten mobilen Phase in zwei Stufen, wobei
- die Probe einer ersten Säule (1) für eine Grobtrennung der in der Probe enthaltenen Verbindungen zugeleitet wird,
- die in der ersten Säule (1) stattfindende Trennung von einem Detektor (814) überwacht wird,
- und auf der Grundlage der Überwachung durch den Detektor (14) eine von der Probe abzutrennende Fraktion von der ersten Säule (1) einer zweiten Säule (2) zugeführt wird,
- und die in der zweiten Säule (2) stattfindende Trennung von einem zweiten Detektor (15) überwacht wird, der am Auslaßende der zweiten Säule (2) angeordnet ist,
**gekennzeichnet** durch folgende Schritte:
- Einführen von zwei oder mehr Bezugsverbindungen in die erste Säule (1) gleichzeitig mit der Probe,
- wobei die Bezugsverbindungen so ausgewählt sind, daß die Retentionszeiten von zumindest zweien von ihnen kürzer sind als jene der von der Probe abzutrennenden Fraktion, und
- Bestimmung auf der Grundlage der Retentionsindizes, die aus den Retentionszeiten der Bezugsverbindungen berechnet werden, des Zeitpunkts, zu welchem die Fraktion von der ersten Säule (1) an die zweite Säule (2) übertragen wird.

2. Verfahren nach Anspruch 1,
dadurch **gekennzeichnet,** daß die stationären Phasen in der ersten und zweiten Säule (1, 2) unterschiedliche Substanzen sind, wogegen die mobile Phase in beiden Säulen aus derselben Substanz besteht.

3. Verfahren nach Anspruch 2,
dadurch **gekennzeichnet,** daß die stationären Phasen Flüssigkeiten sind, und die mobile Phase ein Gas ist.

4. Verfahren nach einem der Ansprüche 1 bis 3,
dadurch **gekennzeichnet,** daß die Bezugsverbindungen eine homologe Reihe von Verbindungen darstellen.

5. Verfahren nach Anspruch 4,
dadurch **gekennzeichnet,** daß die Reihe von Verbindungen zwei Mitglieder enthält, die von der ersten Säule (1) vor der abzuleitenden Grobfraktion erhalten werden.

## Revendications

1. Procédé de séparation chromatographique d'un échantillon par séparation en deux étapes entre une phase stationnaire présente dans une colonne et une phase mobile traversant cette colonne, dans lequel :
- l'échantillon est introduit dans une première colonne (1) en vue d'une séparation grossière des composés contenus dans l'échantillon,
- la séparation ayant lieu dans la première colonne (1) est surveillée par un détecteur (14),
- et en se basant sur la surveillance du détecteur (14), une fraction devant être séparée de l'échantillon est transférée de la première colonne (1) à une seconde colonne (2),
- et la séparation ayant lieu dans la seconde colonne (2) est surveillée par un second détecteur (15) disposé à l'extrémité de décharge de la seconde colonne (2),
**caractérisé** par les étapes consistant :
- à introduire deux ou plus de deux composés de référence dans la première colonne (1) simultanément avec l'échantillon,
- les composés de référence étant choisis de manière telle que le temps de rétention d'au moins deux de ces composés soit plus court que le temps de rétention de la fraction devant être séparée de l'échantillon, et
- à déterminer sur la base des indices de rétention calculés à partir des temps de rétention des composés de référence le moment où la fraction est transférée de la première colonne (1) à la seconde colonne (2).

2. Procédé selon la revendication 1, **caractérisé** en ce que les phases stationnaires dans les première et seconde colonnes (1, 2) sont des substances différentes, tandis que la phase mobile dans les deux colonnes consiste en la même substance.

3. Procédé selon la revendication 2, **caractérisé** en ce que les phases stationnaires sont des liquides et la phase mobile est un gaz.

4. Procédé selon l'une quelconque des revendications 1 à 3**, caractérisé** en ce que les composants de référence comprennent une série homologue de composés.

5. Procédé selon la revendication 4, **caractérisé** en ce que la série de composés comprend deux éléments qui sont obtenus à partir de la première colonne (1) avant que la fraction grossière cesse d'être recueillie.
